(19) Europäisches Patentamt

European Patent Office

Office européen des brevets

(11) Publication number: **0 231 542**
**B1**

(12) **EUROPEAN PATENT SPECIFICATION**

(45) Date of publication of the patent specification:
26.09.90

(51) Int. Cl.⁵: **G01N 15/02**, G01N 15/10,
G01N 21/47, G01N 21/53

(21) Application number: 86202212.6

(22) Date of filing: 08.12.86

(54) Particle detector for wafer processing equipment and method of detecting a particle.

(30) Priority: 10.12.85 US 807395
11.12.85 US 807901
16.09.86 US 907776

(43) Date of publication of application:
12.08.87 Bulletin 87/33

(45) Publication of the grant of the patent:
26.09.90 Bulletin 90/39

(84) Designated Contracting States:
BE DE FR GB IT

(56) References cited:
EP-A- 0 203 600
US-A- 3 578 867
US-A- 3 708 675

PATENT ABSTRACTS OF JAPAN, vol. 4,
no. 74 (P-13)[556], 30th May 1980; & JP - A
- 55 39047 (RICOH K.K.) 18-03-1980
PATENT ABSTRACTS OF JAPAN, vol. 6,
no. 112 (P-124)[990], 23th June 1982; & JP - A
- 57 042 842 (NITSUTAD K.K.) 10-03-1982
APPLIED OPTICS, vol. 18, no. 7, 1st April 1979,
pages 1009-1014, Optical Society of America, US; H.E.
GERBER: "Portable cell for simultaneously measuring
the coefficients of light scattering and extinction for
ambient aerosols"

(73) Proprietor: High Yield Technology, 2400 Bayshore
Frontage Road, Mountain View, CA 94043(US)

(72) Inventor: Borden, Peter, 354 Tennessee Lane, Palo Alto,
CA 94306(US)

(74) Representative: Noz, Franciscus Xaverius, Ir. et al,
Algemeen Octroolbureau P.O. Box 645, NL-5600 AP
Eindhoven(NL)

## Description

FIELD OF THE INVENTION

This invention relates to a particle detector and in particular to a particle detector for monitoring airborne particles or particles in a vacuum, or in a fluid environment.

BACKGROUND

As wafer size increases and as device geometry becomes smaller, particulate detection and control becomes ever more important in semiconductor processing. Monitoring of particulate levels is important in processes which take place in an environment of air at atmospheric pressure, for example exposure of photoresist patterns, and for processes which take place in a vacuum chamber, for example deposition of metal films. Particulate contamination can be reduced for processes which take place in an environment of air at atmospheric pressure by the use of so called clean rooms which employ air filtration systems. Even with air filtration systems, however, processing equipment employs moving parts which generate particles and monitoring of particulate levels is therefore desirable for early detection of system breakdowns which produce excessive particulate levels.

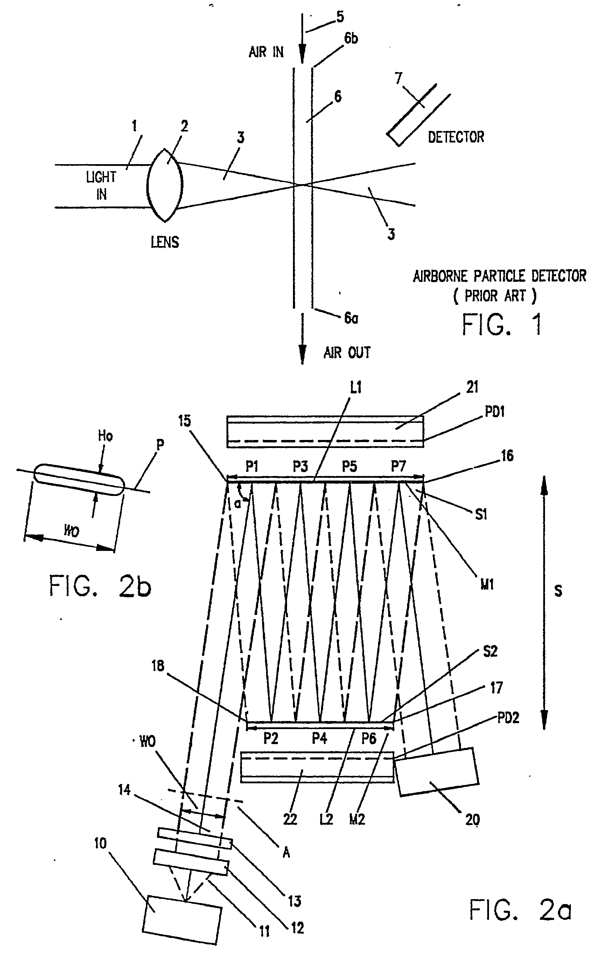

One prior art method for detecting airborne particles is shown in Fig. 1. Sampled air (indicated by arrow 5 in Fig. 1) is drawn through narrow transparent tube 6 by a vacuum pump (not shown) attached to end 6a of cylindrical tube 6. Monochromatic light 1 from a laser (not shown) or white light from a lamp (not shown) is focused by lens 2 to form a focused beam 3 which passes through transparent tube 6 at a selected point along the tube. Light scattered from particles in sampled air 5 drawn through tube 6 which passes through beam 3 is detected by detector 7.

Alternatively an opening (not shown) in tube 6 and an air sheath may be provided so that the focused beam passes through the opening in the tube. Detector 7 contains a photomultiplier and its construction is well known in the art. The scattering intensity is roughly proportional to particle size. Such systems commonly detect particles having a mean diameter in a range between 0.1 $\mu$m and 7.5 $\mu$m and in principle even smaller and larger particles can be detected using the above system.

This prior art particle monitoring device has several drawbacks:

(1) It essentially samples air from a point, i.e. the point or the opening or the tube, and does not provide an adequate measure of particulate contamination over a wider spatial region. Often in a semiconductor processing environment, moving parts of various machinery may produce particles that will not be detected by sampling at a particular point. Thus prior art particle monitoring devices do not adequately monitor particles from multiple or distributed sources.

(2) The prior art monitoring system works in air but not in a vacuum chamber since it requires a flow or air to carry the particles.

(3) Particles may stick to the sides of tube 6 and then become airborne again at a later point in time thereby creating a delay effect.

(4) The physical end 6b of the tube must be placed physically close to the point being monitored which may interfere with other portions of the processing system.

According to the English language abstract of Japanese patent application No. 55-117047 entitled "Photoelectric Smoke Sensor", inventor K. Yamamoto, assigned to Nitsutan K.K., and published March 10, 1982, as reported in Patent Abstracts of Japan, Vol. 6, No. 112 (p. 124) [990], June 23, 1982, JP-4 57 042 842, al light beam is repeatedly reflected by two parallel mirrors. Smoke particles passing through the light beam scatter light waves which can be detected by a photodetector positioned midway between the mirrors and out of line with the propagation of the light beam. The article "Portable Cell for Simultaneously Measuring the Coefficients of Light Scattering and Extinction for Ambient Aerosols", Applied Optics, Vol. 18, No. 7, pages 1009–1014, H.E. Gerber, discloses a similar arrangement.

SUMMARY OF THE INVENTION

A particle detector is provided which is suitable for detecting particles which are present in either air or in a vacuum. In one embodiment the detector includes a laser and beam shaping lenses which generate a beam whose height is small compared to its width. The beam is reflected back and forth between two mirrors a selected number of times in order to create a light "sheet" or "net" between the two mirrors. The path of the light is terminated by a "beam stop" which monitors the intensity of the beam thereby providing a measure of system alignment. Light scattered from a particle falling through the light net generated between the two mirrors is detected by one or more photodiodes. Signals generated by the photodiodes are amplified and processed by a peak detector. The peaks above a selected threshold value are counted by a microprocessor, which calculates particle flux density.

In one embodiment the beam is chopped and a lens is employed to focus the beam in order to compensate for beam divergence. Projecting members prevent dust from settling on the reflecting surfaces of the mirrors and also prevent light scattered by imperfections in the mirror surface from reaching the photodiodes. In a specific arrangement, the photocells are located so as to provide direct viewing of the light sheet between the two reflecting mirrors thereby enabling the making of a very compact sensor assembly. Since the reflecting mirrors are moved closer together in the compact sensor assembly, a significant improvement in response to the sensed light beam is realized. In another arrangement which is useful for monitoring particles in high temperature environments, such as experienced with hot or corrosive gases or liquids, the sensor assembly includes a narrow, elongated pipe with attached glass windows to provide a small gap between the reflecting mirrors. The glass windows serve to protect the optical system from corrosion and heat. The housing for the sensor assembly is water-cooled to reduce thermal effects.

Two or more particle detectors of this invention may be ganged together to provide detection of particles falling through a large area, for example 8 inches by 8 inches.

## BRIEF DESCRIPTION OF THE DRAWINGS

Figure 1 shows an airborne particle detector of the prior art;
Figure 2a shows a top view of the particle detector of the present invention;
Figure 2b shows the shape of the beam emerging from the beam expander shown in Figure 2a;
Figure 2c shows a partial side view of the particle detector shown in Figure 2a;
Figure 2d shows an alternate path for the light employed in the particle detector;
Figure 2e shows the path of the light scattered along 15° rays reflected by parabolic mirror 21 and focused on photodiode $PD_1$ shown in Figure 2a and Figure 2c;
Figure 3a shows the scattering cross section for a spherical particle into an angular region between $\theta$ and $\theta + 5°$;
Figure 3b shows the angle $\theta$ and $\theta + 5°$ employed in Figure 3a;
Figure 4 shows a block diagram of the circuitry used to process the signal received by photodiode $PD_1$;
Figure 5a shows a typical output signal of amplifier 34b shown in Figure 4;
Figure 5b shows the positive envelope of the signal shown in Figure 5a;
Figure 6 illustrates beam divergence as a function of path length;
Figure 7a shows integrated scatter cross section versus angular region;
Figure 7b shows the angular region between a cone having angle 10° and a cone having angle $\phi$;
Figure 8 shows a lens arrangement for compensating for beam divergence;
Figure 9 shows an alternate arrangement for compensating for beam divergence;
Figure 10 is a top view of a compact direct view sensor assembly, that is an alternative embodiment of this invention;
Figure 11 is a side view of the sensor assembly of Figure 10;
Figure 12 is an end view of the sensor assembly illusstrated in Figure 11;
Figure 13 is a top view of another alternative embodiment of the invention employing a compact sensor assembly including a pipe structure; and
Figure 14 is a side view of the sensor assembly of Figure 13.

## DETAILED DESCRIPTION

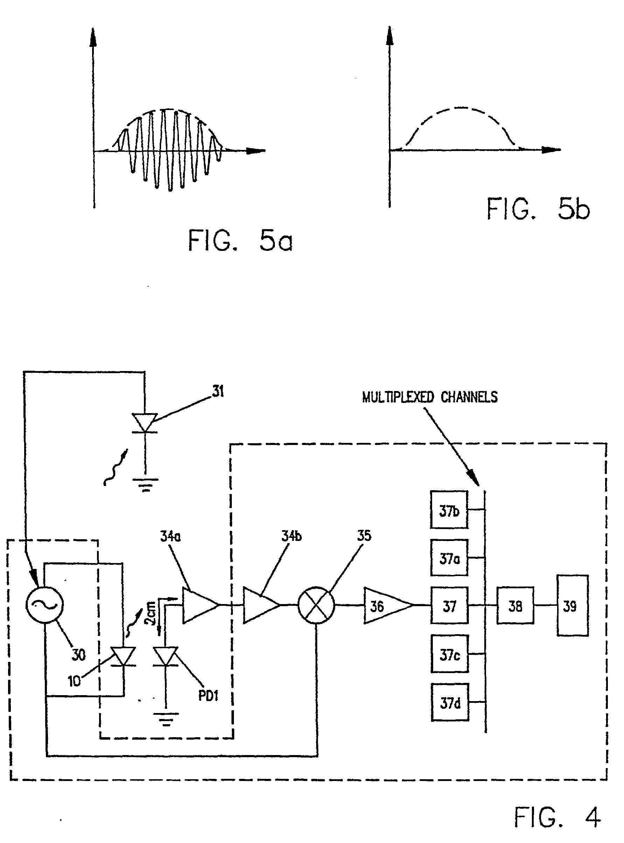

Figure 2a shows a plan view (not to scale) and Figure2c shows a side view of one embodiment of the particle monitor of the present invention. Laser 10 is preferably a semiconductor laser, for example an AlGaAs laser operating at a wavelength of 820 nm. RCA laser No. C86000E and Hitachi laser No. HL8312E are suitable for this purpose. Other sources of light (not necessarily monochromatic) may also be employed with this invention. Beam 11 which emerges from the P-N junction of semiconductor laser 10 is shaped (collimated) by cylindrical beam shaping lenses 12 and 13 which are coupled to shape the beam in the horizontal and vertical planes. Beam 14 which emerges from lens 13 is shown in more detail in Figure 2b which shows a cross section of laser beam 14 along line A shown in Figure 2a. In one embodiment, beam 14 is modulated or chopped by circuitry shown schematically in Figure 4. Beam 14 has an initial height $H_0$ and an initial width $W_0$ determined by the width of the P–N junction (not shown) of semiconductor laser 10 and by shaping lens 12 and 13.

In one embodiment, the width or the P–N junction is approximately 40 μm and beam 14 as it emerges from shaping lens 13 has a width of 2.0 μm and a height or 0.4 mm. Laser 10 and beam shaping lenses 12 and 13 are positioned relative to planar dielectric mirrors $M_1$ and $M_2$ so that the dielectric surfaces $S_1$ and $S_2$ of mirrors $M_1$ and $M_2$ respectively are parallel to each other and perpendicular to the plane P through the center of beam 14 as shown in Figure 2b. The reflecting surfaces $S_1$ and $S_2$ of mirrors $M_1$ and $M_2$ have a length $L_1$ and $L_2$, respectively, and a height h as indicated by arrows $L_1$ and $L_2$ in Figure 2a and h in Figure 2c.

In Figure 2a the solid line emerging from laser 10 denotes the center of beam 14. Light at the center of beam 14 strikes surface slat plat an angle of incidence $\alpha < 90°$ and is reflected to point $P_2$ on surface $S_2$

3

and in general is reflected back from $P_k$ to $P_{k+1}$ where $k=1, ..,6$ thus creating the zig-zag pattern shown in Figure 2a. The light reflected from point $P_7$ is received by beam stop 20 which contains a photocell (not shown).

In Figure 2a the area between each pair or adjacent parallel lines indicated by long dashes represents a segment or light beam 14 traveling towards surface $S_1$ and the area between each pair or adjacent parallel lines indicated by short dashes represents a segment of beam 14 traveling from surface $S_1$ towards surface $S_2$. The separation S between surfaces $S_1$ and $S_2$ and the angle or incidence $\alpha$ are chosen so that the distance between $P_1$ and $P_3$ is the width $W_0$ of beam 14. Since surfaces $S_1$ and $S_2$ are parallel it follows that the distance between $P_k$ and $P_{k+2}$ is $W_0$ for $k=2,3,4,5$. Note that for this selection of parameters S and $\alpha$ the zig-zag path of beam 14 creates a sheet of light that covers the entire area of the trapezoid defined by the end points 15 and 16 of surface $S_1$ and points 17 and 18 of $S_2$. In fact this entire area is covered both by light traveling from surface $S_1$ to surface $S_2$ and by light traveling from surface $S_2$ to surface $S_1$.

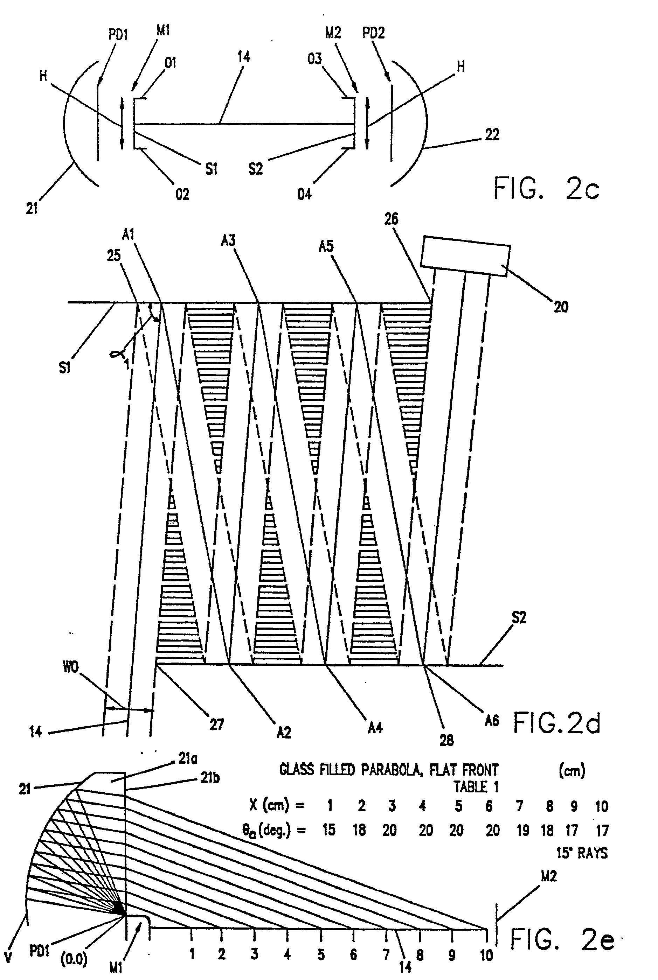

Figure 2d shows an alternate selection of separation S between surfaces $S_1$ and $S_2$ and an alternate selection of the angle of incidence $\alpha$ wherein the distance between the first and second points $A_1$ and $A_3$ where the center of beam 14 strikes surface $S_1$ is greater than the width $W_0$ of beam 14. For this selection of parameters the zig-zag pattern (light net) created by the reflections of beam 14 does not cover the entire area of the trapezoid defined by points 25, 26, 27 and 28 of reflecting surfaces $S_1$ and $S_2$ respectively. The shaded triangles denote those areas not covered by the beam.

A side view of reflecting surfaces $S_1$ and $S_2$ is shown in Figure 2c. Collector mirrors 21 and 22 collect light scattered from particles which fall through the light net generated by beam 14 between surfaces $S_1$ and $S_2$. These collector mirrors are typically parabolic in shape and focus the scattered light on photodiodes $PD_1$ and $PD_2$, respectively. The height, h, of mirrors $M_1$ and $M_2$ is small relative to the dimensions of collector mirrors 21 and 22 since mirrors 21 and 22 can only collect light which is reflected out of the plane of the light sheet generated by laser beam 14 and which also "clears" mirrors $M_1$ and $M_2$ and "overhangs" $O_1$, $O_2$, $O_3$ and $O_4$. "Overhangs" $O_1$, $O_2$, $O_3$ and $O_4$ prevent dust from settling on surfaces $S_1$ and $S_2$ and, being opaque, prevent light scattered by imperfections in surface $S_1$ and $S_2$ from reaching collector mirrors 21 and 22.

Note that the side view of the light net created by the reflection of beam 14 from surfaces $S_1$ and $S_2$ is shown schematically as merely a line. Absent compensating measures, the thickness of beam 14 tends to gradually increase as the beam propagates due to beam divergence. This in turn reduces the power density of the beam. This gradual increase in beam thickness is not shown in Figure 2c for the sake of simplicity.

Similarly, without compensation for divergence, the width of beam 14 also increases with path length but this is not shown in Figs. 2a and 2d for simplicity. The divergence of the width of beam 14 is generally much smaller than the divergence of the height of the beam since $H_0$ is less than $W_0$.

Dielectric mirrors $M_1$ and $M_2$ are typically made of alternating high and low index coatings on a glass or quartz substrate. An appropriate mirror is a Melles Griot $\lambda/30$ mirror with a proprietary MAX-R coating, such as part number /237, having minimum reflectance of 99.3%. Hence, beam intensity decreases only gradually as the number of reflections of beam 14 between surfaces $S_1$ and $S_2$ increases. Nevertheless, when employing a semiconductor laser with this invention, commercial models of which are currently limited in power, e.g. typically less than 20 milliwatts, surfaces $S_1$ and $S_2$ are separated by a distance S which is typically larger than $L_1$ and $L_2$ in order to reduce the number of reflections since each reflection reduces the power density of the reflected beam.

It should be noted with respect to both Figure 2a and Figure 2d, however, that typically more than the six or seven reflections between surfaces $S_1$ and $S_2$ will be employed but a small number of reflections is shown in the figures for the sake of simplicity. For example, with $S=150$ mm, $W_0=1$ mm, 20 reflections would cover an area approximately 150 mm by 20 mm.

Beam stop 20, which comprises a photocell (not shown in Figure 2a) in a housing, terminates beam 14 and monitors the power of the laser beam incident on the photocell. This monitoring is accomplished through conventional circuitry (not shown) and serves to indicate when the system components are misaligned. If the laser beam is misaligned, the power of the beam incident on the photocell in beam stop 20 decreases below a preselected level, and conventional circuitry (not shown) causes a signal to be emitted from beam stop 20. This signal may actuate a visual signal device such as a light or may be provided to a microprocessor (not shown).

Figure 2e shows a partial diagram of one embodiment of collector mirror 21 and photodiode $PD_1$. The lower portion of the diagram, which is the mirror image of the top portion, is not shown for the sake of clarity. Mirror 21 is parabolic in shape. The focus of the parabola is 2 cm from the vertex V. The center of photodiode $PD_1$, which is 0.5 cm in width (vertical dimension in Figure 2e), is located at the origin (0,0) of the coordinate system and is 2.6 cm from vertex V. The distance between mirror $M_1$ and photodiode $PD_1$ is 0.2 cm and mirror $M_1$ is separated from mirror $M_2$ by 10 cm. Region 21a between parabolic mirror 21 and flat surface 21b contains glass having an index of refraction of 1.5 which refracts the rays of scattered light at 15° shown in Figure 2e toward the horizontal. (Surface 21b is the front surface of the glass.) The use of such a glass having an index of refraction greater than 1 increases the angle of ac-

ceptance, $\theta_a$, which is the largest angle through which light can be scattered from a particle in beam 14 in front of mirror M1 and still be reflected to photodiode $PD_1$ via lens 21.

Table 1 in Figure 2e shows the acceptance angle $\theta_a$ (in degrees) as a function of x, where x is the distance of a particle in beam 14 in front of mirror $M_1$. As shown in Table 1, the minimum angle of acceptance for particles at least 1 cm in front of mirror $M_1$ is 15 degrees.

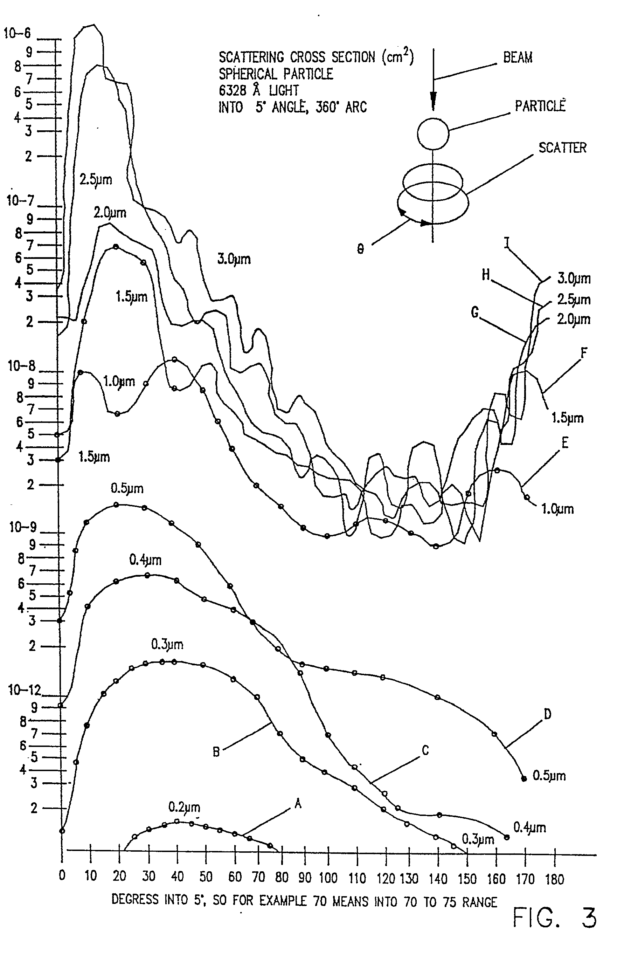

Figure 3a shows scatter cross-section for spherical particles as a function of angle and particle size for monochromatic light having a wavelength of 6328Å (from an HeNe laser) incident on the particle.

The abscissa in Figure 3a is labeled in degrees and each abscissa $\theta$ represents the solid region between the right circular cone having angle $\theta$ and the right circular cone having angle $\theta+5°$ as shown in Figure 3b. The ordinates are measured in $cm^2$.

Curves A, B, C, D, E, F, G, H, and I are scatter cross-section curves for particles having a physical diameter of 0.2 μm, 0.3 μm, 0.4 μm, 0.5 μm, 1.0 μm, 1.5 μm, 2.0 μm, 2.5 μm, and 3.0 μm respectively. Due to interference effects, each particle has an apparent cross section which is different from its physical cross section. The scattering cross section shown in Figure 3a is the apparent cross section. An AlGaAs laser diode, as is used in the preferred embodiment, produces light having a wave length of 8200Å. The intensity of scattered light is somewhat less in this case, but the angular dependence is approximately the same as that shown in curves A through I in Figure 3a. Note that the most intense scatter is in the forward direction, for example curve A at approximately 25°. For this reason, the collector lens system shown in Figure 2c is used with the lenses located approximately perpendicular to the direction of travel of laser beam 14 in order to collect forward scatter. A system with collector lenses located on the sides of the laser net generated by laser beam 14 and generally parallel to the directions of travel of laser beam 14 would be operable but would be much less efficient.

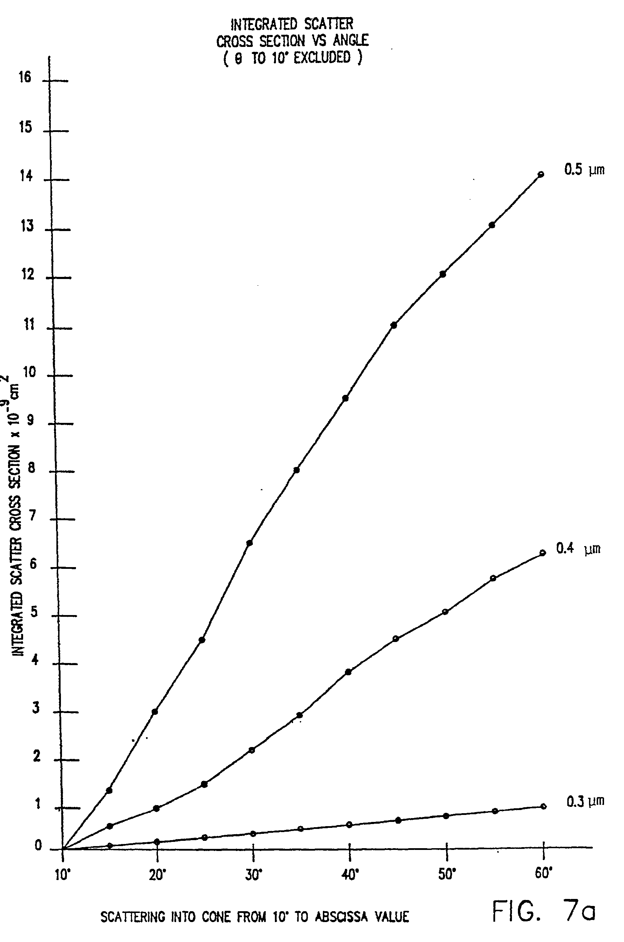

In one embodiment, the light emitted from laser diode 10 is electronically chopped (pulsed) in a conventional way by connecting an AC current source 30 (shown schematically in Figure 4) to laser diode 10. The output signal of photocell 31 in beam stop 20 (shown in Figure 2a) is fed back to power source 30 of laser diode 10 in order to maintain a selected constant laser power output. The purpose of chopping the beam is to produce a particle detection system that operates in the presence of daylight or light from other nonmodulated light sources. This greatly improves signal-to-noise ratio since the detector circuit described below looks for signals at the chopping frequency rather than at DC. In one embodiment the frequency of the alternating current source is 3 megahertz and it is preferred to use frequency sufficiently high so that the laser beam has at least 10 on-cycles during the time it takes a particle to fall under the influence of gravity vertically through the light net generated by beam 14. For example, if it is assumed that a particle falls (under the influence of gravity) vertically downward through a beam having a thickness H = 0.03 cm at a velocity of 1500 cm/second (which corresponds to a particle falling from rest in a vacuum through a distance of approximately 1.15 meters) then ten cycles must occur in 1/50,000 seconds which corresponds to a frequency of 500 kHz. Since beam 14 is chopped, the scattered light that is received by photodiodes $PD_1$ and $PD_2$ as a particle falls through the light net generated by beam 14 is also chopped. The chopped scattered light sensed by photodiode $PD_1$ is amplified by amplifier 34a. Amplifier 34a is a low noise operational amplifier, for example, amplifier LT1037C made by Linear Technology. Alternately, amplifier 34a can be made of discrete components and a low noise FET, thereby providing an even better signal to noise ratio. It is preferable to mount amplifier 34a within 2cm of photodiode $PD_1$ in order to minimize noise pick-up in the connections. A second gain stage 34b is mounted in a separate housing indicated schematically by the dotted line in Figure 4. A typical output signal of amplifier 34b is shown (not to scale) by the solid line in Figure 5a. The dotted line connecting the positive peaks of the solid line in Figure 5a is the "positive envelope" of the signal. The output signal of amplifier 34b is sent to mixer 35 which may be, for example, part no. XR-2208, an analog multiplier made by Exar. Mixer 35 also receives the 3 megahertz signal from alternating current source 30. The output of mixer 35 (shown in Figure 5b) is the positive envelope of the output signal of amplifier 34b. The output signal of mixer 35 is amplified by amplifier 36, for example, part no. LT1055 from Linear Technology, and then provided to peak detector 37 whose output signal represents the peak magnitude of the envelope shown in Figure 6b as amplified by amplifier 36. The output of peak detector 37 is provided to A/D converter 38 which provides a corresponding digital signal to microprocessor 39.

In this embodiment the output signal of peak detector 37 is multiplexed with the output signal of peak detector 37a. Peak detector 37a is the peak detector associated with photodiode $PD_2$. The remaining circuitry associated with photodiode $PD_2$ is the same as that associated with photodiode $PD_1$ and is not shown in Figure 4 for the sake of simplicity.

The peak detectors 37b, 37c, and 37d in Figure 4 represent peak detectors for photodiodes, not shown, which are used in those embodiments where two or more systems identical to the one shown in Figure 2a are ganged together, i.e., placed in close physical proximity, in order to provide particle detection for a larger area.

In typical applications the computer calculates the particle flux density, that is, the number of particles which pass through beam 14 in a selected time interval. Microprocessor 39 compares the signals it receives from peak detectors 37 and 37a. When both signals are in excess of a preselected threshold value, microprocessor 39 determines that a particle has fallen through the light net generated by beam 14. The peak detectors provide signals which are held for a selected time period, for example, a millisecond, so that only the largest particle that scatters light in a selected time period is counted. This is acceptable in application since most counts are very low, for example in a clean room typically less than one particle per second is counted. The microprocessor keeps this count and tracks the time, thereby enabling it to calculate the particle flux density and to output the result on a display (not shown) or through an interface bus (not shown) to an external computer. The microprocessor can also estimate particle size based on the gain of circuits 34a, 34b, 35, and 36 and the detected signal strength provided by the A/D converter. Typically the output of the microprocessor can also be used to trigger the closing of an interlock relay (not shown) to terminate operation of processing equipment if the detected particle flux exceeds a preset critical level.

In the embodiment of the invention shown in Figure 2d, particles which fall through the shaded triangles do not, of course, scatter light to collectors 21 and 22. However if it is assumed that the particles which fall through the region bounded by mirrors $S_1$ and $S_2$ and the light beam are uniformly distributed, then one may estimate the total particulate count by multiplying the actual particulate count generated by particles falling through the area actually covered by the zig-zag path of light beam 14 by the total area between surfaces $S_1$ and $S_2$ divided by the area actually covered by the zig-zag path of light beam 14.

Since one principle of operation of this system is the detection of light scattered by a particle falling through the beam, it is critical to maintain an acceptable power density over the entire path of the beam. The power density of the beam, which is defined as the beam power divided by the cross-sectional area of the beam, drops with the distance the beam is propagated due to beam divergence.

Figure 6 shows the vertical beam divergence for a collimated beam having an initial height $H_0$ and an initial width $W_0$ (shown in Figure 2b) as a function of the distance x that the beam has propagated. As shown in Figure 6, after propagating a distance x the beam thickness h is given by

$H = H_0 + 2d_1 = H_0 + 2x\tan\theta$.

Moreover, $\theta = \lambda/\pi H_0$ where $\lambda$ is the wavelength of the monochromatic laser beam. Therefore

$H = H_0 + 2x\tan(\lambda/\pi H_0)$.

Since $\theta$ is a small angle

$H = H_0 + 2x\lambda/\pi H_0 = H_0(1 + 2x\lambda/\pi H_0^2)$.

A similar analysis shows that the width of the beam after propagating a distance x is given by

$W = W_0(1 + (1 + 2x\lambda/\pi H_0^2)$.

Thus, the power density of the beam after the beam propagates a distance x is given by

$P(x) = P_0/HW = P_0/H_0W_0(1 + 2\lambda x/\pi H_0^2) (1 + 2\lambda x/\pi W_0^2)$.

Assuming that $H_0$ is much less than $W_0$, the critical separation (where the power density is approximately one-half the original power density) is given by

$2\lambda x/\pi H_0^2 = 1$ or $x = \pi H_0^2/2\lambda)$.

For example, for $\lambda = 1$ μm and $H_0 = 3 \times 10^{-2}$ cm, the critical separation occurs where $x = 15$ cm.

If the beam is reflected from surfaces $S_1$ and $S_2$ a total of n times the powder density becomes

$P(x) = P_0R^n/H_0W_0(1 + 2\lambda x/\pi H_0^2) (1 + 2\lambda x/\pi W_0^2)$

where R is the reflectivity (typically about 99,5% for the dielectric mirror surfaces $S_1$ and $S_2$).

The powder of the scattered light received by detector $PD_1$ given by

$PD = \eta\sigma P(x)$

where n is the detector collection efficiency and s is the particle scattering cross-section, (i.e., the cross-sectional area of the particle perpendicular to the beam). Noise limits the sensitivy of the detector. Noise power is defined by

$$P_n = N\sqrt{B}$$

where N is the Noise Equivalent Power (NEP) of the detector PD1 and B is the band width of the electronic circuit 34a, 34b, 35 and 36. Noise Equivalent Power is a standard measure of the noise power in a frequency bandwidth for a photodiode.

The minimum detectable cross section of a particle is found by equating the power received by the detector to the noise power and solving for $\sigma$, the particle scattering cross section, which yields:

$$\sigma_{min} = N\sqrt{B}/nP(x) = N\sqrt{B} \; H_0 W_0 (1 + \lambda x/\pi H_0^2)(1 + \lambda x/\pi W_0^2)/nP_0 Rn$$

It is desirable to maximize $\sigma_{min}$ as a function of $H_0$. The optimal value of $H_0$ is given by solving

$$\partial\sigma_{min}/\partial H_0 = 0$$

which yields

$$H_{0, \; optimal} = \sqrt{\lambda x/\pi.}$$

For example, for a wavelength of 820 nm (AlGaAs laser) and a propagation distance of 50 cm, $H_0$, optimal = 0.036 cm. For values of $H_0$ = 0.036 cm, $W_0$ = 0.1 cm, B = 200 kHz, N = 5 x $10^{-13}$ watts/H, $\eta$ = 0.5, $P_0$ = 10 milliwatts, $\lambda$ = 820 nm, $\sigma min$ = 3.7 $10^{-10}$ cm$^2$. For this $\sigma min$ a 30-degree detector can easily detect a 0.3 $\mu$m-diameter particle. A detector comprising a collector lens 21 and a photodiode $PD_1$ is a thirty degree detector if the photodiode receives rays making an angle up to thirty degrees with the plane of the light net generated by beam 14. Figure 7 shows the integrated scatter cross section versus angle (0° to 10° excluded) for curves, B, C and D of Figure 3a. The abscissa $\theta$ (in degrees) in Figure 7a represents the region between the right circular cone having an angle of 10° (with the vertical) and the right

circular cone having an angle of $\theta$ as shown in Figure 7b. The power, $P_\theta$, of light scattered into this region is given by $P_\theta = I_0 \; \sigma_\theta$ where $I_0$ is the incident power/unit area and $\sigma_\theta$ is the integrated scatter cross section corresponding to $\theta$ (Figure 7a).

As the above analysis shows, the power density decreases with the propagation distance of beam 14 due to divergence.

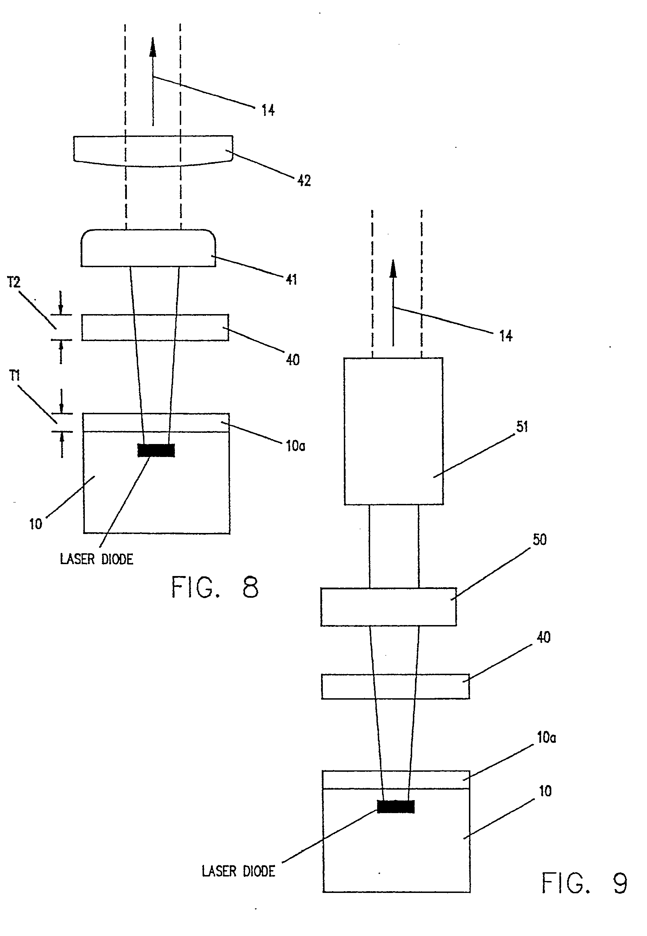

Beam divergence can be compensated for by, instead of collimating the beam using lenses 12 and 13 as explained above, bringing the beam to a focus that exactly compensates for the divergence angle $\theta$ shown in figure 6. This is a technique that is well known in the art, and is discussed, for example, in Melles Griot Optics Guide 3, page 349, 1985. Figure 8 shows in more detail one preferred embodiment for compensating for this divergence. Laser diode 10 is typically packaged so that light emerging from the p/n junction of laser 10 passes through glass 10a. The thickness $T_1$ of glass 10a affects (by refraction) the dimensions of the beam which emerges from glass 10a and may vary from manufacturer to manufacturer. The focusing qualities of lenses 41 and 42 are selected based on a beam which has passed through a selected thickness T of glass greater than the varying thicknesses for plate 10a typically employed by different manufacturers. Thus, by inserting glass plate 40 having thickness $T_2$ where $T_2$ is selected so that $T_1 + T_2 = T$, the remainder of the optical system may remain unchanged when different laser diodes employing different glass thickness $T_1$ are used from time to time.

The beam which emerges from glass plate 40 passes through cylindrical lens 41 which focuses the beam in the vertical dimension indicated by the arrow Ho in Figure 2b. The radius of curvature of lens 40 is selected to exactly compensate for the vertical beam divergence angle $\theta$ shown in Figure 6. The beam emerging from cylindrical lens 41 then passes through cylindrical lens 42 which has a radius of curvature selected to exactly compensate for horizontal beam divergence (divergence in the width of the beam). Beam 14 emerging from lens 42 thus maintains a constant thickness and a constant width as it propagates between mirrors $M_1$ and $M_2$.

Alternatively, divergence in the thickness H of beam 14 can be corrected by slightly curving the mirror surfaces $S_1$ and $S_2$. The use of cylindrical lenses 41 and 42 described above is preferable to this second method since curved mirrors are expensive and difficult to implement.

A third method of collimation and divergence correction is to use a gradient index lens. Gradient index lenses are available from Melles Griot in the 06LGT product line in consumer specified length. A gradient index lens is a glass rod with an index of refraction that varies with diameter. A focusing action results as light propagates through the rod. The focal length of the gradient index lens is determined by the length of the glass rod. Figure 9 shows one embodiment of the optical means used to compensate for beam divergence employing a gradient index lens. The elements in Figure 9 that are the same as in Figure 8 bear the same numerical labels. In Figure 9, the beam emerging from flat glass plate 40 is received by cylindrical lens 50 selected so that the beam emerging from lens 50 has a desired ratio of height to width. The beam from lens 50 is received by gradient index lens 51 which collimates the beam along the horizontal (width) axis and compensates for beam divergence angle $\theta$ (Figure 6) along the vertical thickness axis, so that the light net generated by beam 14 has constant thickness.

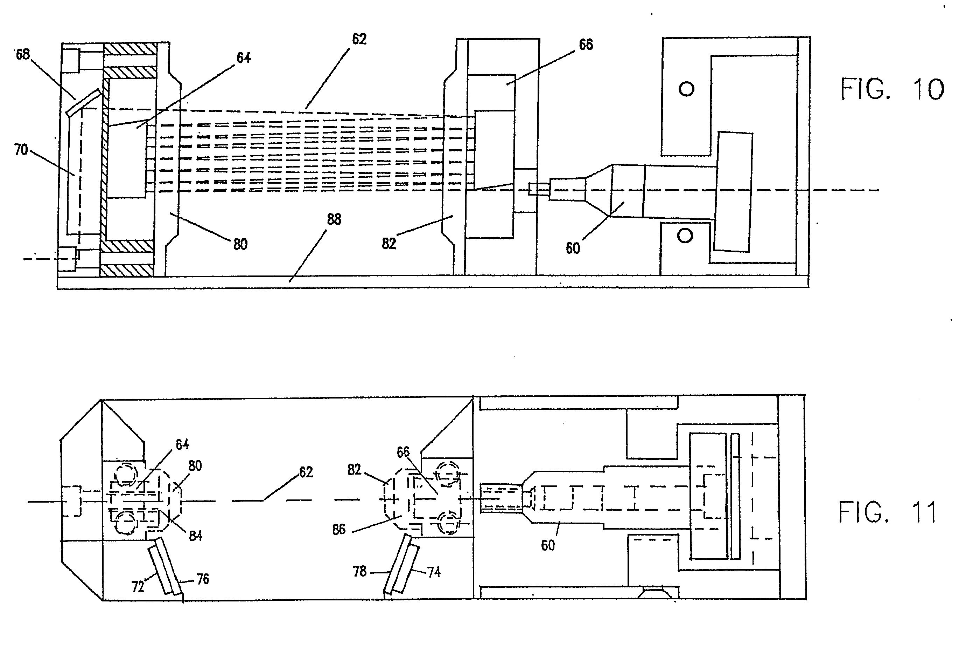

With reference to Figures 10, 11, 12a, and 12b, a compact direct view sensor is illustrated. The direct view sensor assembly includes a light source 60, such as a laser cartridge, having lenses that provide a collimated laser beam 62. The beam is directed to a first reflecting mirror 64 at an angle of about 15° relative to the planar face of the mirror 64. The beam is reflected to a second mirror 66 that has a face substantially parallel to that of the first mirror 64 so that a light sheet or light net is produced in the narrow gap between the mirrors. The reflected beam passes over the first mirror 64 to impinge on a photodiode ·

68. The photodiode indicates the intensity of the light beam that is received to ensure that the laser beam and the optical system of the sensor assembly are operating properly. The beam is reflected from the photodiode into a beam stop cavity 70 which prevents stray light from returning to the optical system, and provides a safety feature.

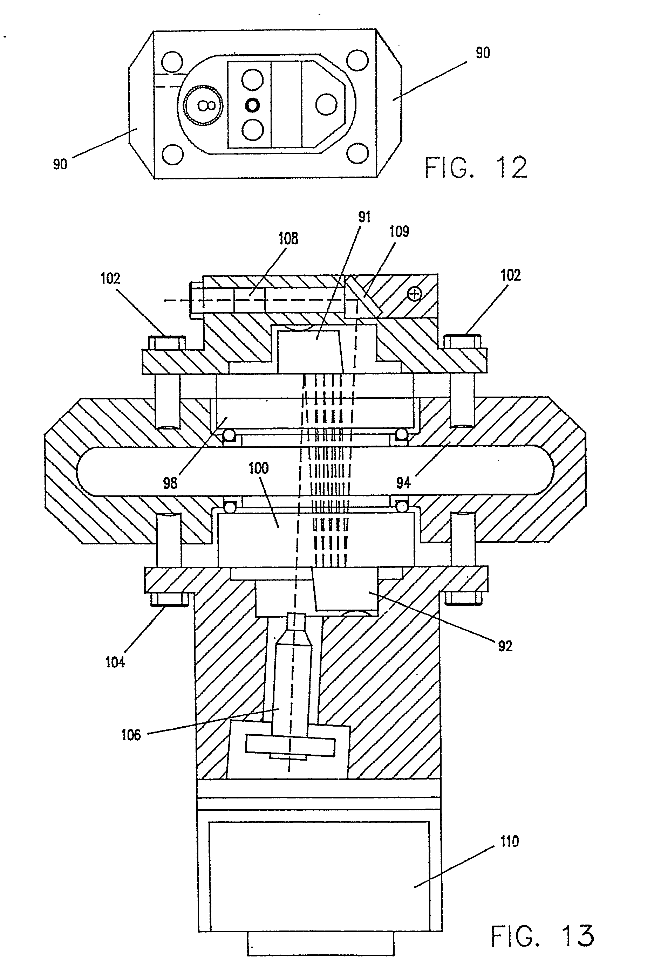

As illustrated in Figure 11, photocells 72 and 74 are positioned close to the mirrors 64 and 66 to detect the traversal of particles through the light sheet. The photocells generate signals representative of the incidence of particles passing in the gap between the mirrors. The signals are amplified, peak detected and processed by a microprocessor that computes the particle flux density, as described previously. A visual display is obtained by means of a display monitor that is coupled to the microprocessor. Glass filters 74 and 76 are provided with the photocells to block spurious light of different wavelengths than that of the laser beam. The mirrors have front pieces 80 and 82 which are made with dielectric stacks, formed of a substrate with a MAX-R (trademark of Melles Griot) coating that passes a wavelength of about 780 nanometers. The front pieces are attached to cover glasses 84 and 86 that are seated over the faces of the respective mirrors.

The sensor assembly is positioned in a frame 88, and support brackets 90, one being illustrated in Figure 12, enclose the ends of the frame to form a housing or enclosure for the sensor assembly.

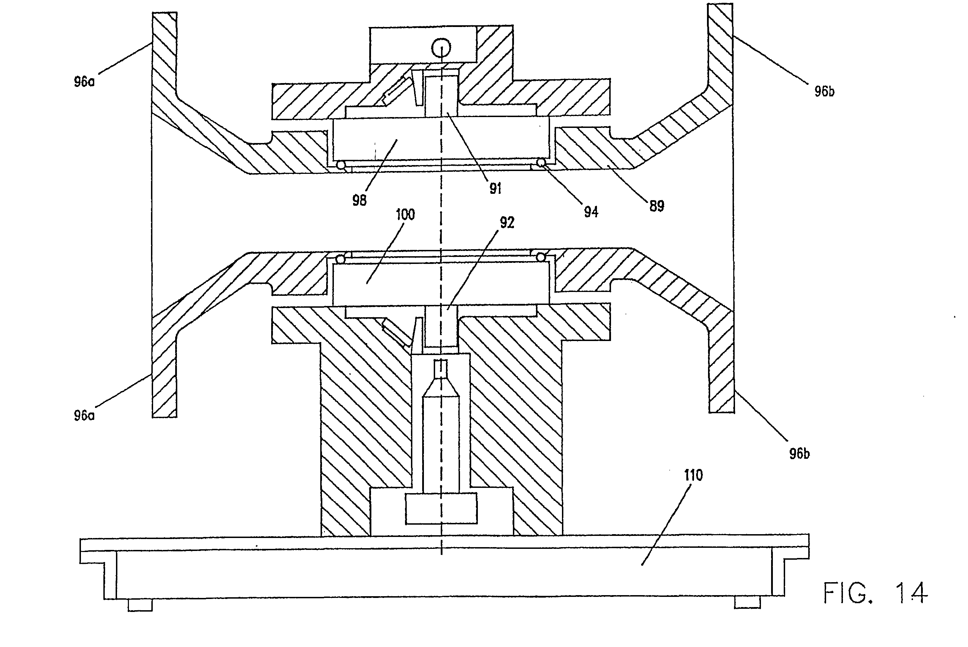

An alternative embodiment of a sensor assembly is depicted in Figures 13 and 14. The sensor assembly, which is useful for particle detection of hot or corrosive gasses or fluids, is made with a pipe section 89 that is disposed in a substantially transverse direction between two reflecting mirrors 91 and 92. The pipe section 89 has a narrow central portion 94 and flared flange portions 96a, 96b which enable coupling the pipe section to standard diameter pipes through which the gas or fluid under detection is passed. Glass windows 98 and 100 are provided between the mirrors and the central cavity of the pipe section. The glass windows protect the optical system from corrosion and heat. The windows are made of a heat resistant, low temperature coefficient glass, such as fused silica. The glass is polished flat on the front and back surfaces. The mirrors are assembled to the windows, which are mounted onto the pipe using fluorocarbon O-rings that are able to withstand temperatures up to 200°C. The mirrors are aligned by tightening two sets of three bolts 102 and 104 that clamp the windows to the pipe, while the O-rings provide the desired play.

When operating in high temperature environments, the housing for the laser 106 and the beam stop structure 108, which includes the photodiode 109, are cooled by circulating cooling fluid or water through channels or pipes positioned in the housing. As previously described, a preamplifier 110 is provided to amplify the intensity of the laser beam.

With the small gap between the mirrors, as embodied in the alternative implementations of Figs. 10-14, a compact structure that provides improved signal resolution is made possible. The compact structures are made with a reduced number of parts and are less costly to manufacture.

The scope of the invention is not limited to the specific arrangements, materials and parameters disclosed herein. For example, more than two mirrors may be used to generate the light net, and the optical system may be modified to provide a desired path for the light beam. Also, the pipe section described with reference to Figs. 13 and 14 may be cylindrical, a rectangular channel, or any configuration affording the compact narrow gap between the reflecting mirrors.

## Claims

1. A particle detector comprising means for generating a beam of light; first means for reflecting said beam of light; second means for reflecting said beam of light, said first means, and said second means being positioned relative to one another so that said beam of light is reflected from said first means to said second means N times and from said second means to said first means M times, where N and M are preselected positive integers $\geq 1$, and wherein said beam is initially incident on said first means for reflecting at an angle not equal to 90°; and means for detecting light scattered by a particle passing through said light beam; characterized in that: said first and second means for reflecting said beam of light are highly reflective mirrors; and said means for detecting light are at least two photodetectors, at least one photodetector being positioned behind the plane of each said first and second mirror.

2. A particle detector as in Claim 1 further comprising a beam stop for terminating said beam after said beam has been reflected said N times.

3. A particle detector as in Claim 2 wherein said beam stop includes means for sensing the intensity of light incident on said beam stop.

4. A particle detector as in Claim 3 wherein said beam stop further includes means for emitting a signal when the intensity of light incident on said beam stop falls below a preselected value.

5. A particle detector as in Claim 1 wherein said means for generating a beam of light comprises a laser.

6. A particle detector as in Claim 1 wherein said first means for reflecting said beam of light and said second means for reflecting said beam of light each comprises a mirror having a planar surface.

7. A particle detector as in Claim 1 wherein said first means for reflecting said beam of light and said second means for reflecting said beam of light each comprises a mirror curved to reduce the divergence of said beam of light.

8. A particle detector as in Claim 1 wherein said means for generating a beam of light includes a lens having a focal length selected to compensate for beam divergence positioned between a source of said beam of light and said first means for reflecting.

9. A particle detector as in Claim 6 further comprising at least one member extending outward from one of said mirrors to prevent dust from settling on said surface of said one of said mirrors.

10. A particle detector as in Claim 6 further comprising at least one opaque member extending outward from one of said mirrors to prevent light scattered from imperfections in said surface of said one of said mirrors from being detected by said means for detecting.

11. A particle detector as in Claim 1 wherein said means for generating a beam of light comprises one or more lenses which produce a beam of light having a height less than its width.

12. A particle detector as in Claim 5 further including means for chopping said light beam.

13. A particle detector as in Claim 1 wherein said means for detecting comprises an optical element for gathering said light scattered by a particle and for reflecting said light scattered by a particle to a means for sensing said light scattered by a particle.

14. A particle detector as in Claim 13 further comprising a material having an index of refraction greater than 1 placed between said optical element and said means for sensing in order to increase the acceptance angle of said means for detecting.

15. A particle detector as in Claim 1 wherein said means for detecting scattered light comprises a collecting mirror and a photodiode, said collecting mirror focusing said scattered light on said photodiode.

16. A particle detector as in Claim 15 wherein said means for detecting further includes means for sensing a representative of the peak amplitude of a light signal received by said photodiode.

17. A particle detector as in Claim 16 wherein said means for detecting further includes an analog-to-digital converter and a microprocessor, said analog-to-digital converter providing said microprocessor with the digital representation of said representative of said peak amplitude of said light signal received by said photodiode.

18. A particle detector as in Claim 1 wherein said means for generating a beam of light comprises a gradient index lens.

19. A method of detecting a particle comprising generating a beam of light; reflecting said beam of light from a first means for reflecting to a second means for reflecting N times and from said second means for reflecting to said first means for reflecting M times, where N and M are preselected positive integers greater than or equal to 1, and wherein said beam is initially incident on said first means for reflecting at an angle ≠ 90°; and detecting light scattered by said particle passing through said light beam; characterized in that: said first and second means for reflecting a beam of light are highly reflective mirrors; and said method for detecting light using at least two photodetectors, at least one photodetector being positioned behind the plane of each said first and second mirrors.

20. The method of Claim 19 further including terminating said beam after said beam has been reflected said N times.

21. A particle detector as in Claim 1, including a pipe section having a narrow cavity extending substantially transversely to said beam of light.

22. A particle detector as in Claim 21, including window means disposed adjacent to said pipe section and between said first reflecting means and said second reflecting means.

23. A particle detector as in Claim 21, wherein said light detecting means are positioned closely adjacent to said reflecting means.

24. A particle detector as in Claim 21, wherein said pipe section comprises flanged portions for coupling to external pipes so that fluids or gases can be passed through said narrow cavity.

Patentansprüche

1. Teilchendetektor mit einem Mittel zum Erzeugen eines Lichtstrahlenbündels; einem ersten Mittel zum Reflektieren des Lichtstrahlenbündels; einem zweiten Mittel zum Reflektieren des Lichtstrahlenbündels, wobei das erste Mittel und das zweite Mittel relativ zueinander so angeordnet sind, daß das Lichtstrahlenbündel von dem ersten Mittel zu dem zweiten Mittel N-mal und von dem zweiten Mittel zu dem ersten Mittel M-mal reflektiert wird, wobei N und M vorgewählte positive ganze Zahlen ≥1 sind und wobei das Strahlenbündel anfänglich auf das erste Mittel fällt und mit einem von 90° abweichenden Winkel reflektiert wird; und Mitteln zum Detektieren von Licht, das von einem das Lichtstrahlenbündel durchlaufenden Teilchen gestreut wird; dadurch gekennzeichnet, daß: das erste und das zweite Mittel zum Reflektieren des Lichtstrahlenbündels stark reflektierende Spiegel sind; und die Mittel zum Detektieren von Licht wenigstens zwei Photodetektoren sind, wobei wenigstens ein Photodetektor hinter der Ebene jedes der beiden Spiegel angeordnet ist.

2. Teilchendetektor nach Anspruch 1, ferner enthaltend einen Strahlenbegrenzer zum Beenden des Strahlenbündels, nachdem es N-mal reflektiert worden ist.

3. Teilchendetektor nach Anspruch 2, bei welchem der Strahlenbegrenzer Mittel zum Erfassen der Intensität des auf ihn auftreffenden Lichts enthält.

4. Teilchendetektor nach Anspruch 3, bei welchem der Strahlenbegrenzer ferner Mittel enthält, die ein Signal emittieren, wenn die Intensität des auf den Strahlenbegrenzer auftreffenden Lichts unterhalb eines vorgewählten Werts fällt.

5. Teilchendetektor nach Anspruch 1, bei welchem das Mittel zum Erzeugen eines Lichtstrahlenbündels einen Laser umfaßt.

6. Teilchendetektor nach Anspruch 1, bei welchem das erste Mittel zum Reflektieren des Lichtstrahlenbündels und das zweite Mittel zum Reflektieren des Lichtstrahlenbündels jeweils einen Spiegel mit einer ebenen Oberfläche umfassen.

7. Teilchendetektor nach Anspruch 1, bei welchem das erste Mittel zum Reflektieren des Lichtstrahlenbündels und das zweite Mittel zum Reflektieren des Lichtstrahlenbündels jeweils einen Spiegel umfassen, der gekrümmt ist, damit die Divergenz des Lichtstrahlenbündels reduziert wird.

8. Teilchendetektor nach Anspruch 1, bei welchem das Mittel zum Erzeugen eines Lichtstrahlenbündels eine zwischen einer Quelle des Lichtstrahlenbündels und dem ersten Mittel ZUin Reflektieren angeordneten Linse enthält, deren Brennweite so gewählt ist, daß die Strahlendivergenz kompensiert wird.

9. Teilchendetektor nach Anspruch 6, ferner enthaltend wenigstens ein sich von einem der Spiegel nach außen erstrekkendes Glied, das verhindert, daß sich auf der Oberfläche des einen der Spiegel Staub absetzt.

10. Teilchendetektor nach Anspruch 6, ferner enthaltend wenigstens ein lichtundurchlässiges Glied, das sich von dem einen Spiegel nach außen erstreckt und verhindert, daß von Defekten der Oberfläche eines der Spiegel gestreutes Licht von dem Detektormittel detektiert wird.

11. Teilchendetektor nach Anspruch 1, bei welchem das Mittel zum Erzeugen eines Lichtstrahlenbündels ein oder mehr Linsen aufweist, die ein Lichtstrahlenbündel erzeugen, dessen Höhe kleiner als seine Breite ist.

12. Teilchendetektor nach Anspruch 5, ferner enthaltend ein Mittel zum Zerhacken des Lichtstrahlenbündels.

13. Teilchendetektor nach Anspruch 1, bei welchem das Detektormittel ein optisches Element zum Sammeln des von einem Teilchen gestreuten Lichts und zum Reflektieren des von einem Teilchen gestreuten Lichts zu einem Mittel zum Erfassen des von einem Teilchen gestreuten Lichts enthält.

14. Teilchendetektor nach Anspruch 13, ferner enthaltend ein Material mit einem Brechungsindex größer als 1, das zwischen dem optischen Element und dem Mittel zum Erfassen angeordnet ist, damit der Aufnahmewinkel des Detektormittels vergrößert wird.

15. Teilchendetektor nach Anspruch 1, bei welchem das Detektormittel für das gestreute Licht einen Sammelspiegel und eine Photodiode umfaßt, wobei der Sammelspiegel das gestreute Licht auf die Photodiode fokussiert.

16. Teilchendetektor nach Anspruch 15, bei welchem das Detektormittel ferner ein Mittel zum Erfassen einer Repräsentativgröße für die Spitzenamplitude eines von der Photodiode empfangenen Lichtsignals enthält.

17. Teilchendetektor nach Anspruch 16, bei welchem das Detektormittel ferner einen Analog-Digital-Umsetzer und einen Mikroprozessor enthält, wobei der Analog-Digital-Umsetzer dem Mikroprozessor die digitale Darstellung der Repräsentativgröße der Spitzenamplitude des von der Photodiode empfangenen Lichtsignals liefert.

18. Teilchendetektor nach Anspruch 1, bei welchem das Mittel zum Erzeugen eines Lichtstrahlenbündels eine Gradientenindexlinse umfaßt.

19. Verfahren zum Detektieren eines Teilchens, bei welchem ein Lichtstrahlenbündel erzeugt wird; das Lichtstrahlenbündel von einem ersten Reflexionsmittel zu einem zweiten Reflexionsmittel N-mal und von dem zweiten Reflexionsmittel zu dem ersten Reflexionsmittel M-mal reflektiert wird, wobei N und M vorgewählte positive ganze Zahlen größer oder gleich 1 sind und wobei das Strahlenbündel anfänglich mit einem Winkel ≠ 90° auf das erste Reflexionsmittel fällt; und von dem das Lichtstrahlenbündel durchlaufenden Teilchen gestreutes Licht detektiert wird; dadurch gekennzeichnet, daß: das erste und das zweite Mittel zum Reflektieren eines Lichtstrahlenbündels stark reflektierende Spiegel sind; und das Verfahren zum Detektieren von Licht wenigstens von zwei Photodetektoren Gebrauch macht, wobei wenigstens ein Photodetektor hinter der Ebene jedes der beiden Spiegel angeordnet ist.

20. Verfahren nach Anspruch 19, bei welchem ferner das Strahlenbündel beendet wird, nachdem es N-mal reflektiert worden ist.

21. Teilchendetektor nach Anspruch 1, enthaltend einen Rohrabschnitt mit einer engen Ausnehmung, die sich im wesentlichen quer zu dem Lichtstrahlenbündel erstreckt.

22. Teilchendetektor nach Anspruch 21, enthaltend ein Fenstermittel, das angrenzend an den Rohrabschnitt und zwischen dem ersten Reflexionsmittel und dem zweiten Reflexionsmittel angeordnet ist.

23. Teilchendetektor nach Anspruch 21, bei welchem die Lichtdetektormittel dicht bei den Reflexionsmitteln angeordnet sind.

24. Teilchendetektor nach Anspruch 21, bei welchem der Rohrabschnitt mit Flanschabschnitten zum Ankoppeln an äußerer Rohre versehen ist, so daß Fluide oder Gase durch die schmale Ausnehmung geleitet werden können.

**Revendications**

1. Détecteur de particules comprenant des moyens destinés à produire un faisceau de lumière; des premiers moyens destinés à réfléchir ce faisceau de lumière; des seconds moyens destinés à réfléchir ce faisceau de lumière, ces premiers moyens et ces seconds moyens étant positionnés l'un par rapport à l'autre de telle sorte que le faisceau de lumière est réfléchi à partir des premiers moyens vers les seconds moyens N fois et à partir des seconds moyens vers les premiers moyens M fois, où Net M sont des nombres entiers positifs présélectionnés ≥ à 1, et le faisceau étant initialement incident sur les premiers moyens pour réfléchir à un angle non égal à 90°; et des moyens pour détecter la lumière dispersée par une particule traversant le faisceau lumineux; caractérisé en ce que:

– les premiers et seconds moyens destinés à réfléchir le faisceau de lumière sont des miroirs fortement réfléchissants; et

– les moyens destinés à détecter la lumière sont au moins deux photodétecteurs, au moins un photodétecteur étant positionné derrière le plan de chacun des premier et second miroirs.

2. Détecteur de particules selon la revendication 1, comprenant de plus un arrêt ou butée de faisceau destiné à interrompre ce faisceau après que celui-ci ait été réfléchi N fois.

3. Détecteur de particules selon la revendication 2, dans lequel l'arrêt ou butée de faisceau comprend des moyens destinés à capter l'intensité de lumière incidente sur l'arrêt de faisceau.

4. Détecteur de particules selon la revendication 3 dans lequel l'arrêt de faisceau comprend de plus des moyens destinés à émettre un signal lorsque l'intensité de lumière incidente sur l'arrêt de faisceau descend au-dessous d'une valeur présélectionnée.

5. Détecteur de particules selon la revendication 1, dans lequel les moyens destinés à produire un faisceau de lumière comprennent un laser.

6. Détecteur de particules selon la revendication 1, dans lequel les premiers moyens destinés à réfléchir le faisceau de lumière et les seconds moyens destinés à réfléchir le faisceau de lumière comprennent chacun un miroir ayant une surface plane.

7. Détecteur de particules selon la revendication 1, dans lequel les premiers moyens destinés à réfléchir le faisceau de lumière et les seconds moyens destinés à réfléchir le faisceau de lumière comprennent chacun un miroir incurvé pour réduire la divergence du faisceau de lumière.

8. Détecteur de particules selon la revendication 1, dans lequel les moyens destinés à produire un faisceau de lumière comprennent une lentille ayant une longueur focale sélectionnée pour compenser la divergence de faisceau positionnée entre une source du faisceau de lumière et les premiers moyens réfléchissants.

9. Détecteur de particules selon la revendication 6, comprenant de plus au moins un élément s'étendant vers l'extérieur à partir de l'un des miroirs pour empêcher la poussière de se déposer sur la surface de l'un des miroirs.

10. Détecteur de particules selon la revendication 6, comprenant de plus au moins un élément opaque s'étendant vers l'extérieur à partir de l'un des miroirs pour empêcher la lumière dispersée à partir d'imperfections dans la surface de l'un des miroirs d'être détectée par les moyens de détection.

11. Détecteur de particules selon la revendication 1, dans lequel les moyens destinés à produire un faisceau de lumière comprennent une ou plusieurs lentilles qui produisent un faisceau de lumière ayant une hauteur inférieure à sa largeur.

12. Détecteur de particules selon la revendication 5, comprenant de plus des moyens destinés à écrêter le faisceau de lumière.

13. Détecteur de particules selon la revendication 1, dans lequel les moyens de détection comprennent un élément optique destiné à recueillir la lumière dispersée par une particule et à réfléchir la lumière dispersée par une particule sur des moyens pour détecter la lumière dispersée par une particule.

14. Détecteur de particules selon la revendication 13, comprenant de plus une matière ayant un indice de réfraction supérieur à 1 placée entre l'élément optique et les moyens de détection pour augmenter l'angle d'acceptance des moyens de détection.

15. Détecteur de particules selon la revendication 1, dans lequel les moyens destinés à détecter la lumière dispersée comprennent un miroir collecteur, une photodiode, le miroir collecteur focalisant la lumière dispersée sur la photodiode.

16. Détecteur de particules selon la revendication 15, dans lequel les moyens de détection comprennent de plus des moyens destinés à capter un élément représentatif de l'amplitude de crête d'un signal lumineux reçu par la photodiode.

17. Détecteur de particules selon la revendication 16, dans lequel les moyens de détection comprennent de plus un convertisseur analogique-numérique et un microprocesseur, ce convertisseur fournissant au microprocesseur la représentation numérique de l'élément représentatif de l'amplitude (je crête du signal lumineux reçu par la photodiode.

18. Détecteur de particules selon la revendication 1, dans lequel les moyens destinés à produire un faisceau de lumière comprennent une lentille à gradient d'indice.

19. Procédé destiné à détecter une particule comprenant l'étape consistant à produire un faisceau de lumière; réfléchir le faisceau de lumière à partir de premiers moyens destinés à réfléchir sur des seconds moyens pour réfléchir N fois et à partir de seconds moyens pour réfléchir aux premiers moyens pour réfléchir M fois, où N et M sont des nombres entiers positifs présélectionnés ≤ à 1, et où le faisceau est initialement incident sur les premiers moyens pour réfléchir selon un angle non égal à 90°; et à détecter la lumière dispersée par la particule traversant le faisceau lumineux; caractérisé en ce que:

– les premiers et seconds moyens destinés à réfléchir un faisceau de lumière sont des miroirs fortement réfléchissants;

– le procédé destiné à détecter la lumière utilisant au moins deux photodétecteurs, au moins un photo-détecteur étant positionné derrière le plan de chacun des premiers et seconds miroirs.

20. Procédé selon la revendication 19 comprenant de plus l'étape consistant à interrompre le faisceau après que ce dernier ait été réfléchi N fois.

21. Détecteur de particules selon la revendication 1, comprenant une section de tubes comportant une cavité étroite s'étendant sensiblement de façon transversale au faisceau de lumière.

22. Détecteur de particules selon la revendication 21, comprenant une fenêtre disposée de façon contiguë à la section de tube et entre les premiers moyens réfléchissants et les seconds moyens réfléchissants.

23. Détecteur de particules selon la revendication 21, dans lequel les moyens de détection de lumière sont positionnés de façon étroitement contiguë aux moyens réfléchissants.

24. Détecteur de particules selon la revendication 21, dans lequel la section de tubes comprend des portions à brides pour le raccordement de tubes externes de sortie que des fluides ou gaz peuvent être amenés à travers cette cavité étroite.

AIRBORNE PARTICLE DETECTOR
( PRIOR ART )

FIG. 1

FIG. 2b

FIG. 2a

FIG. 2c

FIG. 2d

GLASS FILLED PARABOLA, FLAT FRONT (cm)

TABLE 1

| X (cm) = | 1 | 2 | 3 | 4 | 5 | 6 | 7 | 8 | 9 | 10 |
|---|---|---|---|---|---|---|---|---|---|---|
| $\theta_a$ (deg.) = | 15 | 18 | 20 | 20 | 20 | 20 | 19 | 18 | 17 | 17 |

15° RAYS

FIG. 2e

SCATTERING CROSS SECTION (cm$^2$)
SPHERICAL PARTICLE
6328 Å LIGHT
INTO 5° ANGLE, 360° ARC

DEGRESS INTO 5°, SO FOR EXAMPLE 70 MEANS INTO 70 TO 75 RANGE

FIG. 3

FIG. 5a

FIG. 5b

FIG. 4

INTEGRATED SCATTER
CROSS SECTION VS ANGLE
( θ TO 10° EXCLUDED )

FIG. 7a

FIG. 8

FIG. 9

FIG. 10

FIG. 11

FIG. 12

FIG. 13

FIG. 14

EP 0 231 542 B1